# EUROPÄISCHE PATENTSCHRIFT

(11) **EP 1 606 867 B1**
(45) Veröffentlichungstag und Bekanntmachung des Hinweises auf die Patenterteilung: **11.10.2006**
(21) Anmeldenummer: 04704191.8
(22) Anmeldetag: 22.01.2004
(51) Int. Cl.: H02G 3/22

(54) **KABELDURCHFÜHRUNGSVORRICHTUNG**
CABLE LEADTHROUGH DEVICE
DISPOSITIF DE TRAVERSEE DE CABLE

(30) Priorität: 27.03.2003 DE 10313989
(43) Veröffentlichungstag der Anmeldung: 21.12.2005
(73) Patentinhaber: Murrplastik Systemtechnik GmbH, 71570 Oppenweiler (DE)
(72) Erfinder: HABEL, Martin, 74626 Bretzfeld (DE); SOHN, Wolfgang, 73733 Esslingen (DE); SCHARF-MARTINI, Lutz, 73614 Schorndorf (DE); FUNK, Rainer, 71543 Wüstenrot (DE)
(74) Vertreter: Reule, Hanspeter
(86) Internationale Anmeldenummer: PCT/EP2004/000479
(87) Internationale Veröffentlichungsnummer: WO 2004/086583

(56) Entgegenhaltungen:
- DE-A- 3 224 977
- GB-A- 2 337 870
- US-A- 4 771 136

## Beschreibung

Die Erfindung betrifft eine Vorrichtung zum Abdecken und Abdichten eines zur Durchführung von Kabeln bestimmten Wanddurchbruchs, beispielsweise in einem Schaltschrank. Bekannte Vorrichtungen dieser Art weisen einen am Durchbruchrand der Wand befestigbaren Halterahmen und mehrere in Rahmenöffnungen lösbar einsetzbare und dort fixierbare Tüllen aus elastomerem Material auf. Zumindest ein Teil der Tüllen ist mit mindestens einer über einen Randspalt von außen zugänglichen Durchgangsöffnung für ein Kabel versehen. Die Rahmenöffnungen sind einseitig für den Einsatz der Tüllen offen, und jeweils mindestens eine der in die Rahmenöffnungen einsetzbaren Tüllen ist im Bereich der die Rahmenöffnung begrenzenden Seitenwände in Einschubrichtung fixierbar.

Vorrichtungen dieser Art dienen dazu, mit Steckeinrichtungen oder dergleichen versehene Kabel in einen Schaltschrank einzuführen, ohne dass die Steckeinrichtungen von den Kabeln gelöst werden müssen. Die Vorrichtungen haben außerdem die Aufgabe, den Wanddurchbruch nach dem Einführen der Kabel abzudecken und abzudichten. Der Wanddurchbruch ist meist rechteckig ausgebildet und so groß, dass die Kabel mit den Steckeinrichtungen eingeführt werden können.

Es sind Kabeldurchführungen bekannt (DE-A-44 34 202, WO99/06747), deren Rahmen aus mehreren, sich zu einem Gesamtrahmen ergänzenden Rahmenteilen aus starrem Kunststoffmaterial bestehen. Die Rahmenteile weisen einander paarweise zugewandte randoffene Öffnungen auf, die sich in verbundenem Zustand der Rahmenteile zu geschlossenen Rahmenöffnungen zur Aufnahme der elastomeren Tüllen ergänzen. Die Tüllen sind ihrerseits mit Durchgangsöffnungen für die Kabel versehen, die über elastisch aufweitbare Randschlitze radial von außen her zugänglich sind. Die im Losezustand mit den auf die Kabel aufgesteckten Tüllen bestückten Rahmenteile werden durch Schraubverbindungen unter Zusammenpressen der Tüllen miteinander verbunden. Anschließend werden die auf diese Weise vorkonfektionierten Rahmen im Bereich des Wanddurchbruchs am Schaltschrank so befestigt, dass die einen Kabelenden in das Schaltschrankinnere weisen. Bei den bekannten Kabeldurchführungen wird als nachteilig empfunden, dass die Handhabung der geteilten Rahmen bei der Vormontage relativ aufwendig ist.

Eine Vorrichtung der eingangs genannten Art ist aus der GB 2 337 870 A bekannt. Sie weist einen Rahmen auf, der am Durchbruchsrand der Wand befestigbar ist. Der Rahmen weist eine Öffnung auf, in die mehrere Kabeltüllen einsetzbar sind, von denen einige mit einer oder mehreren Durchgangsöffnungen für ein Kabel versehen sind. Auf einer Seite weist der Halterahmen eine Klappe auf, über die die Rahmenöffnung einseitig für den Einsatz der Tüllen geöffnet werden kann. Durch Schließen der Klappe werden die in die Rahmenöffnung eingesetzten Tüllen fixiert. Auch bei dieser Vorrichtung ist der Halterahmen somit zweiteilig ausgeführt, so dass die Handhabung relativ aufwendig ist.

Ausgehend hiervon liegt der Erfindung die Aufgabe zugrunde, eine Kabeldurchführungsvorrichtung für Schaltschränke zu entwickeln, die besonders einfach mit Kabeln bestückt und am Schaltschrank montiert werden kann.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht im Wesentlichen darin, dass anstelle der geteilten Rahmenelemente ein einteiliger Halterahmen verwendet wird, dessen Rahmenöffnungen vorzugsweise quer zur Durchgangsöffnung einseitig für den Einsatz der Tüllen offen sind, wobei jeweils mindestens eine der in die Rahmenöffnungen einsetzbaren Tüllen im Bereich der die Rahmenöffnungen begrenzenden Seitenwände verrastbar, vorzugsweise in Einschubrichtung verrastbar ist. Hierzu sind die Seitenwände der Rahmenöffnungen mit Rastvertiefungen zur Aufnahme von partiell über die Tüllenoberfläche seitlich überstehenden Rastorganen versehen. Zusätzlich können die Tüllen mit seitlichen Rastvertiefungen zur Aufnahme von partiell über die Seitenwände nach innen überstehenden Rastorganen versehen sein.

Eine vorteilhafte Ausgestaltung der Erfindung sieht vor, dass die Rastorgane zumindest partiell in das elastomere Tüllenmaterial eingebettet sind. Vorteilhafterweise sind die Rastorgane biegeelastisch ausgebildet. Sie können aus einem in das elastomere Tüllenmaterial eingebetteten steifen oder steifelastischen Bauteil beispielsweise aus Kunststoff oder Metall bestehen. Innerhalb des Tüllenmaterials befindet sich zweckmäßig ein Hohlraum, in den das Rastorgan beim Rastvorgang zeitweilig eintaucht. Eine weitere bevorzugte Ausgestaltung der Erfindung sieht vor, dass zumindest ein Teil der Tüllen aus zwei einander auf der Seite der Durchgangsöffnung zugewandten, sich gegenseitig ergänzenden Tüllenhälften besteht, die auf einander abgewandten Seiten jeweils eines der Rastorgane oder eine der Rastvertiefungen aufweisen. Die beiden Tüllenhälften sind dabei zweckmäßig spiegelbildlich zueinander ausgebildet und angeordnet. Bevorzugt sind die Tüllenhälften an einer Stoßstelle vorzugsweise einstückig scharnierartig miteinander verbunden und auf der der Stoßstelle gegenüberliegenden Seite offen. Die offene Seite lässt sich um die scharnierartige Verbindung aufbiegen, so dass ein Kabel radial von außen in die Durchgangsöffnung eingeführt werden kann. Vorteilhafterweise sind die Tüllenhälften an der Stoßstelle über ein Filmscharnier einstückig miteinander verbunden. Die Rastorgane können als voneinander getrennte Bauteile in je eine der Tüllenhälften eingebettet sein. Alternativ dazu können die Rastorgane über einen die Tülle durchdringenden oder übergreifenden Steg miteinander verbunden sein.

Die Rastorgane weisen zweckmäßig einen parallel zur betreffenden Seitenwand der Tülle ausgerichteten, in einen Hohlraum im Tüllenmaterial einbiegbaren Federsteg und einen am freien Ende des Federstegs angeformten Rastnocken auf, wobei der Rastnocken eine in Einschubrichtung weisende Auflaufschräge und eine an die Auflaufschräge rückwärtig anschließende, entgegen der Einschubrichtung weisende Rastfläche aufweisen kann. Die Rastvertiefungen in den Seitenwänden sind zweckmäßig komplementär zu den Rastnocken ausgeformt.

Die einander gegenüberliegenden Seitenwände der Rahmenöffnungen sind zweckmäßig parallel zueinander ausgerichtet, wobei die Rastvertiefungen oder Rastvorsprünge an den Seitenwänden einer jeden Rahmenöffnung spiegelbildlich einander gegenüberliegen.

Gemäß einer weiteren bevorzugten Ausgestaltung der Erfindung sind die Durchgangsöffnungen der Tüllen in Einsteckrichtung unter Bildung zweier ungleich dicker Wandpartien außermittig angeordnet. Die Rastorgane sind dabei zweckmäßig im Bereich der Seitenwände unsymmetrisch auf der Seite der dickeren Wandpartie angeordnet.

Eine weitere bevorzugte Ausgestaltung der Erfindung sieht vor, dass jeweils zwei Tüllen einer Rahmenöffnung so angeordnet sind, dass sie mit ihren dünneren, vorzugsweise geschlitzten Wandpartien aneinander anliegen und mit ihren dickeren, scharnierartig miteinander verbundenen Wandpartien einander abgewandt sind. Dabei ist nur jeweils eine der beiden Tüllen unter Bildung des Verschlussstücks mit den Seitenwänden der Rahmenöffnungen verrastbar.

Der Halterahmen kann am Durchbruchsrand der Wand fixiert, vorzugsweise angeschraubt werden. Eine weitere bevorzugte Ausgestaltung der Erfindung sieht vor, dass der im Wesentlichen rechteckige Halterahmen zwei geschlossene Schmalseitenränder und nur einen geschlossenen Breitseitenrand aufweist. Zur Fixierung des Halterahmens an der Wand kann der Halterahmen im Bereich seiner geschlossenen Schmalseitenränder mit zur Seite des Wanddurchbruchs überstehenden, am Durchbruchsrand einrastbaren Fixierlaschen versehen sein, wobei die Fixierlaschen als lose Bauteile ausgebildet sein können, die in baulich angepassten Einstecköffnungen in den geschlossenen Schmalseitenrändern des Halterahmens formschlüssig fixiert sind. Eine vorteilhafte Ausgestaltung der Erfindung sieht vor, dass die Fixierlaschen eine in den Durchbruchrand der Wand eingreifende Rasttasche sowie ein am Halterahmen im Bereich der Einstecköffnung einrastbares Rastorgan sowie ein über den Halterahmen frontseitig überstehendes Betätigungsorgan zur Herstellung oder Lösung der Rastverbindung mit dem Durchbruchrand aufweisen.

Im Folgenden wird die Erfindung anhand der in der Zeichnung in schematischer Weise dargestellten Ausführungsbeispiele näher erläutert. Es zeigen
- Fig. 1: eine mit Tüllen vollständig bestückte, in einem Wandausschnitt montierte Kabeldurchführungsvorrichtung;
- Fig. 2a: die Kabeldurchführungsvorrichtung nach Fig. 1, die zur Veranschaulichung nur teilweise mit Tüllen bestückt ist;
- Fig. 2b,: c und d eine Draufsicht und zwei Seitenansichten der nur mit zwei Tüllen bestückten Kabeldurchführungsvorrichtung nach Fig. 2a;
- Fig. 3a: eine schaubildliche Darstellung einer zweiteiligen Kabeltülle für den Einsatz in die Kabeldurchführungsvorrichtung nach Fig. 1 und 2;
- Fig. 3b,: c und d drei Seitenansichten der zweiteiligen Tülle nach Fig. 3a;
- Fig. 4a: eine schaubildliche Darstellung einer gegenüber Fig. 3a abgewandelten Kabeltülle für den Einsatz in die Kabeldurchführungsvorrichtung nach Fig. 1 und 2;
- Fig. 4b: bis e vier Seitenansichten der Kabeltülle nach Fig. 4a;
- Fig. 5a: eine schaubildliche Darstellung eines Fixierungslappens zur Befestigung der Kabeldurchführungsvorrichtung im Bereich des Wanddurchbruchs;
- Fig. 5b: bis d drei Seitenansichten des Fixierlappens nach Fig. 5a.

Die in der Zeichnung dargestellten Bauteile bilden insgesamt eine Kabeldurchführungsvorrichtung, die für den Einsatz in einen Wanddurchbruch 10 in der Außenwand 12 eines Schaltschranks bestimmt ist. Die Vorrichtung dient dazu, mit Steckeinrichtungen oder dergleichen versehene Kabel durch den Wanddurchbruch 10 hindurch in den Schaltschrank einzuführen, ohne dass die Steckeinrichtungen von den Kabeln gelöst werden müssen. Der Wanddurchbruch 10 ist rechteckig ausgebildet und so groß, dass die Kabel mit den Steckeinrichtungen eingeführt werden können.

Die Kabeldurchführungsvorrichtung 14 weist einen im Wesentlichen rechteckigen Halterahmen 16 auf, der an den beiden Schmalseitenrändern 18 und am Breitseitenrand 20 geschlossen und auf der gegenüberliegenden Seite 22 offen ist. Der Halterahmen 16 weist mehrere parallel zu den Schmalseitenrändern 18 ausgerichtete Rippen 24 auf, die eine entsprechende Anzahl Rahmenöffnungen 26 zur Aufnahme von Tüllen 30,31 aus elastomerem Material begrenzen. Die Rahmenöffnungen 28 sind zur Seite 22 des Halterahmens 16 hin offen, so dass die Tüllen 30,31 von der offenen Seite 22 her in die Rahmenöffnungen 28 eingeschoben werden können. Die Parallelführung der Tüllen 30,31 im Bereich der Rahmenöffnungen 28 erfotgt ähnlich wie im Falle der DE-C 36 19 183 durch außenseitige Randwülste 69 der Tüllen 30, die in die Seitenwände 36 randseitig eingreifen.

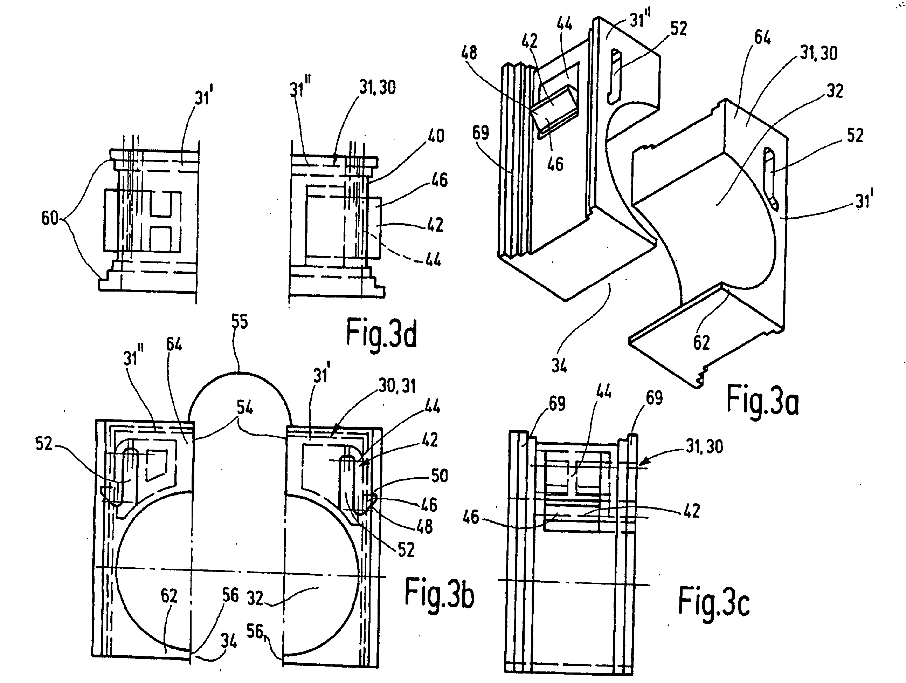

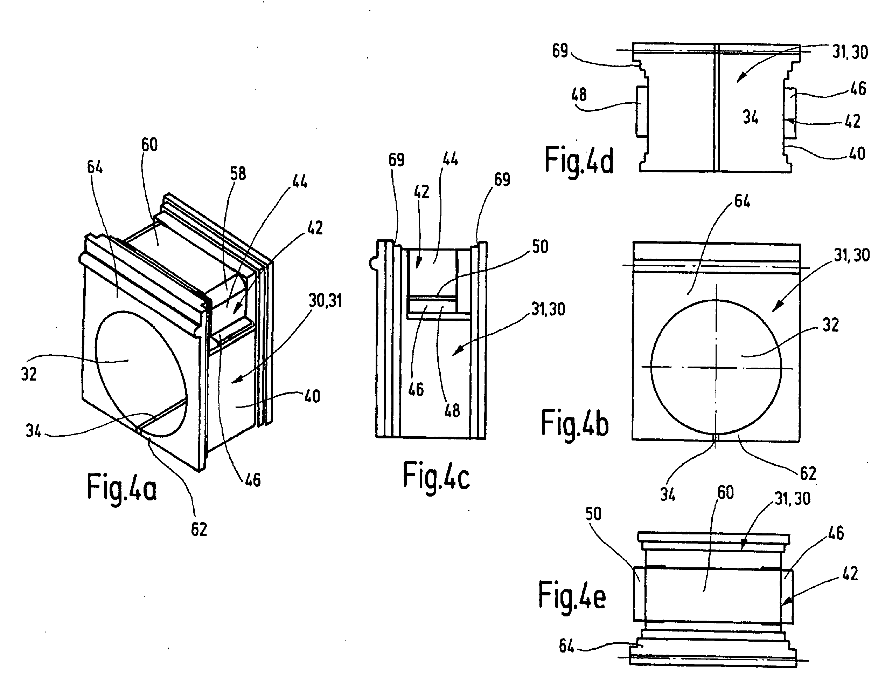

Die Tüllen 30,31 weisen jeweils eine radial von außen zugängliche Durchgangsöffnung 32 für ein nicht dargestelltes Kabel auf. Um die Kabel in die Durchgangsöffnung 28 einführen zu können, sind die Tüllen 30,31 entweder mit elastisch aufweitbaren Randöffnungen 34 versehen (Fig. 4a bis e) oder sie sind zweiteilig ausgebildet (Fig. 3a bis d).

Eine Besonderheit der dargestellten Kabeldurchführungsvorrichtungen besteht darin, dass jeweils die öffnungsnah angeordnete Tülle 31 im Bereich der die Rahmenöffnungen 28 begrenzenden Seitenwände 36 in Einschubrichtung verrastbar ist. Zu diesem Zweck sind die Seitenwände 36 der Rahmenöffnungen 28 mit Rastvertiefungen 38 zur Aufnahme von partiell über die Tüllenoberfläche 40 seitlich überstehenden Rastorganen 42 versehen. Die Rastorgane 42 weisen einen parallel zur betreffenden Tüllenwand 40 ausgerichteten blattfederartigen Federsteg 44 und einen am freien Ende des Federstegs angeformten Rastnocken 46 auf. Der Rastnocken 46 ist mit einer in Einschubrichtung weisenden Auflaufschräge 48 und einer an die Auflaufschräge rückwärtig anschließenden, entgegen der Einschubrichtung weisenden Rastfläche 50 versehen. Innerhalb des Tüllenmaterials ist ein am jeweiligen Rastorgan 42 zugeordneter Hohlraum 52 ausgebildet, in den das Rastorgan 42 beim Rastvorgang zeitweilig eintaucht. Die Rastvertiefungen 38 in den Seitenwänden 36 sind komplementär zu den Rastnocken 46 ausgeformt.

Bei dem in Fig. 3a bis d ausgebildeten Ausführungsbeispiel bestehen die Tüllen 30,31 aus zwei einander auf der Seite der Durchgangsöffnung 32 zugewandten, sich gegenseitig ergänzenden, spiegelbildlich ausgebildeten Tüllenhälften 31',31", in die jeweils ein unabhängiges Rastorgan 42 eingebettet ist. Die Tüllenhälften 31',31" können an ihren Stoßstellen 54 beispielsweise mit einem sich über die gesamte Breite in Fig. 3b erstreckenden, symbolisch angedeuteten Filmscharnier 55 einstückig miteinander verbunden sein, während sie an ihren gegenüberliegenden Stoßstellen 56 unter Bildung eines Einführspalts für die Kabel offen sind.

Bei den in den Fig. 4a bis e gezeigten Ausführungsbeispiel ist eine einstückige Tülle 30,31 aus elastomerem Material vorgesehen, die eine elastisch aufweitbare Randöffnung 34 zum Einführen eines Kabels in die Durchgangsöffnung 32 aufweist und deren Rastorgane 42 an der Wurzel 58 ihrer Federstege 44 einstückig über einen Verbindungssteg 60 miteinander verbunden sind. Der Verbindungssteg 60 kann dabei in das elastomere Tüllenmaterial eingebettet werden. Die Rastnocken 46 weisen ebenfalls eine Auflaufschräge 48 und eine Rastfläche 50 auf, womit sie in die komplementär ausgebildeten Rastvertiefungen 38 in den Seitenwänden 36 der Rahmenöffnungen 28 einrasten können.

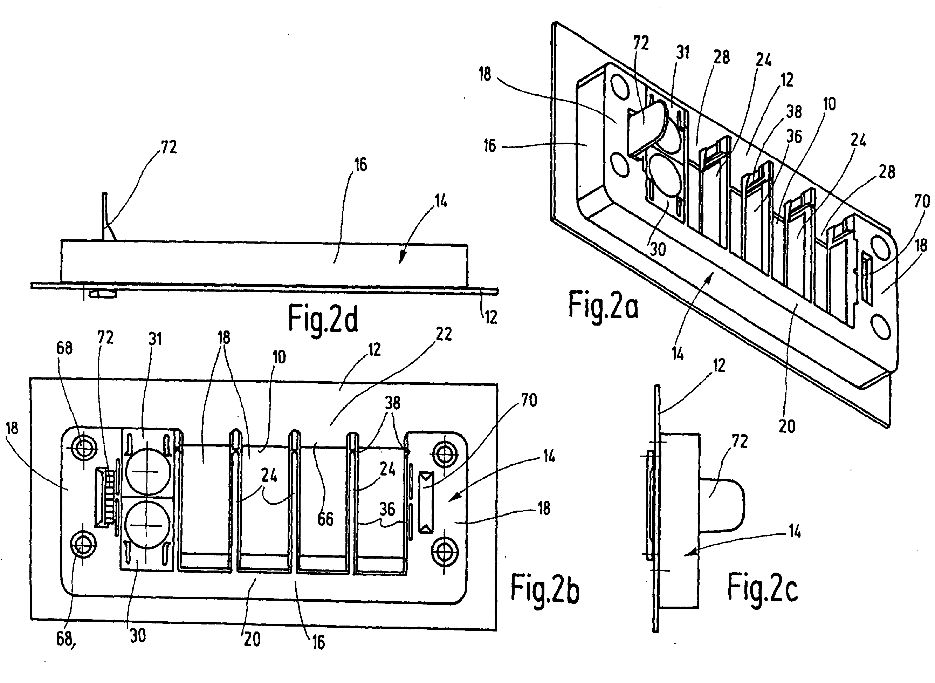

Wie insbesondere aus Fig. 2b, 3b und 4b zu ersehen ist, sind die Durchführungsöffnungen 32 in den Kabeltüllen in Einschubrichtung unsymmetrisch angeordnet. Dadurch ist die Tüllenwand 62 auf der Seite der Randöffnung 64 dünnwandiger ausgebildet als die Tüllenwand 64 auf der gegenüberliegenden Seite. In der dickwandigen Tüllenwand 64 ist genügend Platz für die Rastorgane 42. Die dickwandigen Tüllenwände 34 überlappen den Rand 66 des Durchbruchs 10 in der Wand 12 und werden bei der Montage gegen diesen dichtend angepresst (vgl. Fig. 2b).

Die Fixierung des Halterahmens 16 an der Wand 12 kann entweder mittels Schrauben erfolgen, die durch vier an den Rahmenecken angeordnete Bohrungen 68 zur Wand 10 hindurchgreifen.

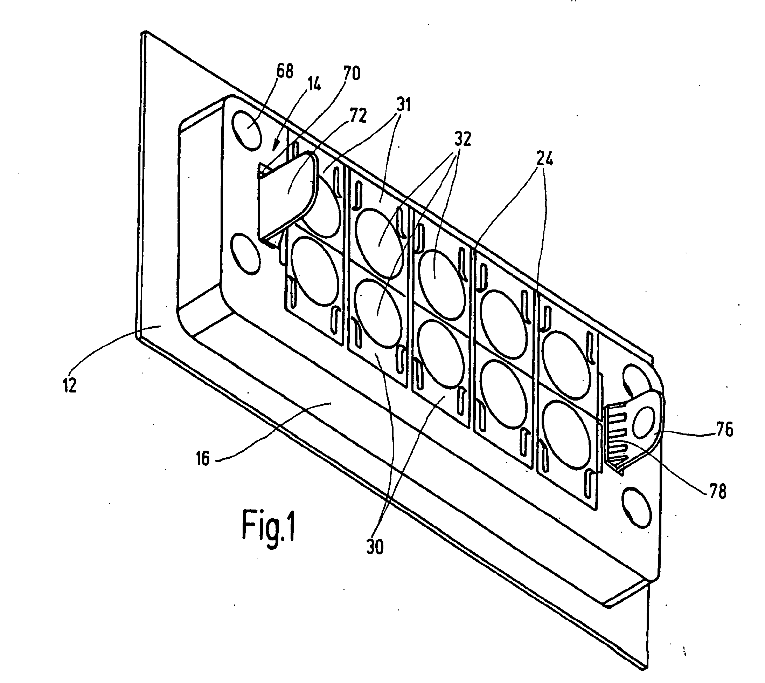

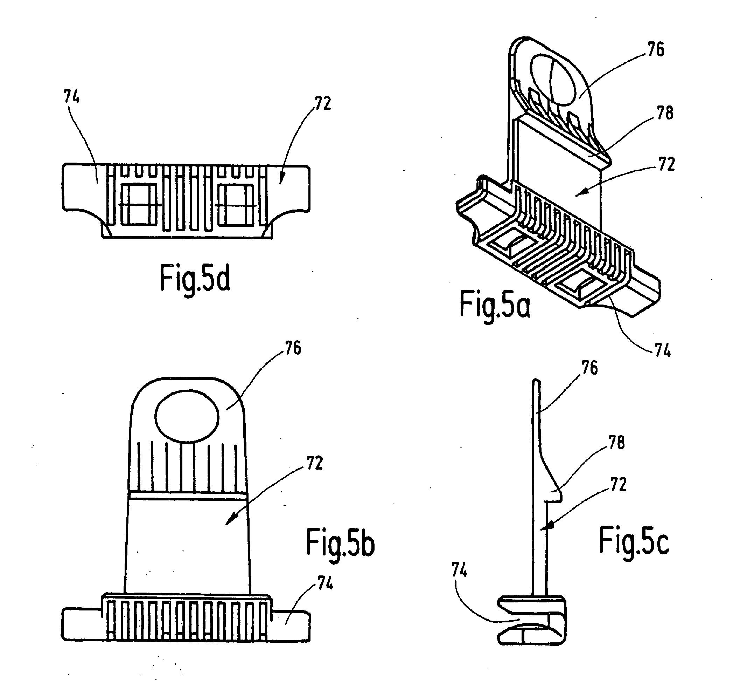

Alternativ dazu weist das in Fig. 1, 2 und 5 gezeigte Ausführungsbeispiel eine einfache Steckverbindung zur Fixierung des mit den Tüllen bestückten Halterahmens im Bereich des Wanddurchbruchs auf. Zu diesem Zweck enthält der Halterahmen 16 im Bereich seiner beiden Schmalseitenwände 18 jeweils eine schlitzförmige Durchstecköffnung 70 für eine Fixierlasche 72. Die Fixierlasche weist auf ihrer dem Wanddurchbruch 10 zugewandten Seite eine den Durchbruchrand 66 der Wand 10 umgreifende Rasttasche 74 sowie ein durch die Durchstecköffnung 70 zur Frontseite hindurchgreifendes Betätigungsorgan 76 auf. Auf der Frontseite ist die Fixierlasche zusätzlich mit einem über den Rand der Durchstecköffnung 70 überstehenden Rastelement 78 am Halterahmen 16 gesichert.

Zusammenfassend ist folgendes festzuhalten: Die Erfindung bezieht sich auf eine Vorrichtung zum Abdecken und Abdichten eines zur Durchführung von Kabeln bestimmten Wanddurchbruchs 10 beispielsweise in einem Schaltschrank. Die Vorrichtung weist einen am Durchbruchrand 66 der Wand 12 befestigbaren Halterahmen 16 und mehrere in Rahmenöffnungen 28 lösbar einsetzbare und dort fixierbare Tüllen 30,31 aus elastomerem Material auf. Zumindest ein Teil der Tüllen 30,31 ist mit mindestens einer Durchgangsöffnung für ein Kabel versehen. Um die Kabeldurchführung besonders einfach mit Kabeln bestücken und am Schaltschrank montieren zu können, wird gemäß der Erfindung vorgeschlagen, dass die Rahmenöffnungen 28 einseitig für den Einsatz der Tüllen 30,31 offen sind und dass jeweils eine der in die Rahmenöffnungen einsetzbaren Tüllen 31 im Bereich der die Rahmenöffnungen 34 begrenzenden Seitenwände 36 in Einschubrichtung verrastbar ist.

## Patentansprüche

1. Vorrichtung zum Abdecken und/oder Abdichten eines zur Durchführung von Kabeln bestimmten Wanddurchbruchs (10) mit einem am Durchbruchsrand (66) der Wand (10) befestigbaren Halterahmen (16) und mit mehreren in Rahmenöffnungen (28) lösbar einsetzbaren Tüllen (30,31) aus elastomerem Material, von denen zumindest ein Teil mit mindestens einer Durchgangsöffnung (32) für ein Kabel versehen ist, wobei die Rahmenöffnungen (28) einseitig für den Einsatz der Tüllen (30,31) offen sind und wobei jeweils mindestens eine der in die Rahmenöffnungen einsetzbaren Tüllen (31) im Bereich der die Rahmenöffnung (28) begrenzenden Seitenwände (36) in Einschubrichtung fixierbar ist, **dadurch gekennzeichnet, dass** die Seitenwände (36) der Rahmenöffnungen (28) mit Rastvertiefungen (38) zur Aufnahme von partiell über die Tüllenoberfläche (40) seitlich überstehenden Rastorganen (42) versehen sind.

2. Vorrichtung nach Anspruch 1, **dadurch gekennzeichnet, dass** die Rahmenöffnungen (24) quer zur Durchgangsöffnung (32) offen sind.

3. Vorrichtung nach Anspruch 1 oder 2, **dadurch gekennzeichnet, dass** die mindestens eine Tülle in Einschubrichtung verrastbar ist.

4. Vorrichtung nach einem der Ansprüche 1 bis 3, **dadurch gekennzeichnet, dass** die Tüllen mit seitlichen Rastvertiefungen oder Rastkanten zur Aufnahme von an den Seitenwänden partiell über die Seitenwände nach innen überstehenden Rastorganen versehen sind.

5. Vorrichtung nach einem der vorangehenden Ansprüche, **dadurch gekennzeichnet, dass** die Rastorgane (42) zumindest partiell in das Tüllenmaterial eingebettet sind.

6. Vorrichtung nach einem der vorangehenden Ansprüche, **dadurch gekennzeichnet, dass** die Rastorgane (42) biegeelastisch ausgebildet sind.

7. Vorrichtung nach einem der vorangehenden Ansprüche, **dadurch gekennzeichnet, dass** die Rastorgane (42) aus einem in das Tüllenmaterial eingebetteten steifen oder steifelastischen Bauteil vorzugsweise aus Kunststoff oder Metall bestehen.

8. Vorrichtung nach einem der vorangehenden Ansprüche, **dadurch gekennzeichnet, dass** innerhalb des Füllmaterials ein dem Rastorgan (42) zugeordneter Hohlraum (52) angeordnet ist, in den das Rastorgan (42) beim Rastvorgang zeitweilig eintaucht.

9. Vorrichtung nach einem der vorangehenden Ansprüche, **dadurch gekennzeichnet, dass** zumindest ein Teil der Tüllen (30,31) aus zwei einander auf der Seite der Durchgangsöffnung (32) zugewandten, sich gegenseitig ergänzenden, vorzugsweise spiegelsymmetrisch ausgebildeten Tüllenhälften (31',31") besteht, die auf einander abgewandten Seiten jeweils ein Rastorgan (42) oder eine Rastvertiefung aufweisen.

10. Vorrichtung nach Anspruch 9, **dadurch gekennzeichnet, dass** die Tüllenhälften (31',31") an einer Stoßstelle (54) vorzugsweise einstückig scharnierartig miteinander verbunden und auf der dieser Stoßstelle (54) gegenüberliegenden Seite (56) unter Bildung einer Randöffnung (34) offen sind.

11. Vorrichtung nach Anspruch 10, **dadurch gekennzeichnet, dass** die Tüllenhälften (31',31") an der geschlossenen Stoßstelle (54) ein Filmscharnier (55) aufweisen.

12. Vorrichtung nach einem der vorangehenden Ansprüche, **dadurch gekennzeichnet, dass** die einander gegenüberliegenden die Rahmenöffnungen (28) begrenzenden Seitenwände (36) parallel zueinander ausgerichtet sind.

13. Vorrichtung nach Anspruch 12, **dadurch gekennzeichnet, dass** die den Rahmenöffnungen zugeordneten Rastvertiefungen (38) oder Rastvorsprünge an den zugehörigen Seitenwänden (36) spiegelbildlich einander gegenüberliegen.

14. Vorrichtung nach einem der vorangehenden Ansprüche, **dadurch gekennzeichnet, dass** die Durchgangsöffnungen (32) der Tüllen (30,31) in Einsteckrichtung unter Bildung zweier ungleich dicker Wandpartien (62,64) außermittig angeordnet sind.

15. Vorrichtung nach Anspruch 14, **dadurch gekennzeichnet, dass** die Rastorgane (42) der Tüllen (30,31) unsymmetrisch auf der Seite der dicken Wandpartie (64) angeordnet sind.

16. Vorrichtung nach Anspruch 14 oder 15, **dadurch gekennzeichnet, dass** jeweils zwei Tüllen (30,31) in einer Rahmenöffnung (28) so angeordnet sind, dass sie mit ihren dünnwandigen Wandpartien (62) gegeneinander anliegen und mit ihren dicken Wandpartien (64) voneinander abgewandt sind.

17. Vorrichtung nach Anspruch 16, **dadurch gekennzeichnet, dass** in jeder Rahmenöffnung jeweils nur eine Tülle (31) mit den Seitenwänden (36) der Rahmenöffnungen (28) verrastbar ist.

18. Vorrichtung nach einem der vorangehenden Ansprüche, **dadurch gekennzeichnet, dass** der Halterahmen (16) am Durchbruchrand (66) anschraubbar ist.

19. Vorrichtung nach einem der vorangehenden Ansprüche, **dadurch gekennzeichnet, dass** der im Wesentlichen rechteckige Halterahmen (16) zwei geschlossene Schmalseitenränder (18) und einen geschlossenen Breitseitenrand (20) aufweist, während der gegenüberliegende Breitseitenrand (22) offen ist.

20. Vorrichtung nach Anspruch 19, **dadurch gekennzeichnet, dass** der Halterahmen (16) im Bereich seiner geschlossenen Schmalseitenränder (18) mit zur Seite des Wanddurchbruchs (10) überstehenden, am Durchbruchrand (66) einrastbaren Fixierlaschen (72) versehen ist.

21. Vorrichtung nach Anspruch 20, **dadurch gekennzeichnet, dass** die Fixierlaschen (72) als lose Bauteile ausgebildet sind, die in einer angepassten Durchstecköffnung (70) in den geschlossenen Schmalseitenrändern (18) des Halterahmens (16) formschlüssig fixiert sind.

22. Vorrichtung nach Anspruch 20 oder 21, **dadurch gekennzeichnet, dass** die Fixierlaschen (72) an eine den Durchbruchrand (66) der Wand (12) umgreifende Rasttasche (74) sowie ein am Halterahmen (16) im Bereich der Durchstecköffnung einrastbares Rastelement (78) aufweisen.

23. Vorrichtung nach einem der Ansprüche 20 bis 22, **dadurch gekennzeichnet, dass** die Fixierlaschen (72) ein über den Halterahmen (16) frontseitig überstehendes Betätigungsorgan (76) zur Herstellung und/oder Lösung der Rastverbindung mit dem Durchbruchrand (66) aufweisen.

24. Vorrichtung nach einem der vorangehenden Ansprüche, **dadurch gekennzeichnet, dass** die Rastorgane einen parallel zu einer Seitenwand (40) der Tülle (30,31) oder der Tüllenhälften (31',31") ausgerichteten, in einen Hohlraum (52) im Tüllenmaterial federnd einbiegbaren Federsteg (44) und einen am freien Ende des Federstegs angeformten Rastnocken (46) aufweisen.

25. Vorrichtung nach einem der vorangehenden Ansprüche, **dadurch gekennzeichnet, dass** die Rastorgane (42) als voneinander getrennte Bauteile in je eine der Tüllenhälften (31',31") eingebettet sind.

26. Vorrichtung nach einem der vorangehenden Ansprüche, **dadurch gekennzeichnet, dass** die Rastorgane (42) über einen die Tülle durchdringenden oder übergreifenden Verbindungssteg (60) miteinander verbunden sind.

27. Vorrichtung nach einem der Ansprüche 24 bis 26, **dadurch gekennzeichnet, dass** der Rastnocken (46) eine in Einschubrichtung weisende Auflaufschräge (48) und eine an die Auflaufschräge rückwärtig anschließende, entgegen der Einschubrichtung weisende Rastfläche (50) aufweist.

28. Vorrichtung nach einem der Ansprüche 24 bis 26, **dadurch gekennzeichnet, dass** die Rastvertiefungen (38) in den Seitenwänden (36) komplementär zu den Rastnocken (46) der das Verschlussstück bildenden Tüllen (31) ausgeformt sind.

29. Tülle für eine einen Halterahmen mit Rahmenöffnungen versehene Kabeldurchführungsvorrichtung (14) die aus elastomerem Material besteht und mit mindestens einer Durchgangsöffnung (32) für ein Kabel versehen ist, **gekennzeichnet durch** zwei nach entgegengesetzten Seiten über die Tüllenoberfläche (40) überstehende Rastorgane (42), die in Rastvertiefungen in den Seitenwänden der Rahmenöffnungen einrastbar sind.

30. Tülle nach Anspruch 29, **dadurch gekennzeichnet, dass** die Rastorgane (42) zumindest partiell in das Tüllenmaterial eingebettet sind.

31. Tülle nach Anspruch 29 oder 30, **dadurch gekennzeichnet, dass** die Rastorgane (42) biegeelastisch ausgebildet sind.

32. Tülle nach einem der Ansprüche 29 bis 31, **dadurch gekennzeichnet, dass** die Rastorgane (42) aus einem in das Tüllenmaterial eingebetteten steifen oder steifelastischen Bauteil vorzugsweise aus Kunststoff oder Metall bestehen.

33. Tülle nach einem der Ansprüche 29 bis 32, **dadurch gekennzeichnet, dass** innerhalb des Tüllenmaterials ein Hohlraum (52) ausgebildet ist, in den das Rastorgan (42) beim Rastvorgang einbiegbar ist.

34. Tülle nach einem der Ansprüche 29 bis 33, **dadurch gekennzeichnet, dass** sie aus zwei auf der Seite der Durchgangsöffnung (32) einander zugewandten, sich gegenseitig ergänzenden, vorzugsweise spiegelsymmetrisch angeordneten Tüllenhälften (31,31') besteht, die auf einander abgewandten Seiten jeweils ein Rastorgan (42) oder eine Rastvertiefung aufweisen.

35. Tülle nach Anspruch 34, **dadurch gekennzeichnet, dass** die Tüllenhälften (31',31") an einer Stoßstelle (54) vorzugsweise einstückig scharnierartig miteinander verbunden und an der gegenüberliegenden Stoßstelle (56) unter Bildung einer zur Durchgangsöffnung (32) führenden Randöffnung (34) offen sind.

36. Tülle nach Anspruch 35, **dadurch gekennzeichnet, dass** die Tüllenhälften (31',31") an der geschlossenen Stoßstelle (54) ein Folienscharnier (55) aufweisen.

37. Tülle nach einem der Ansprüche 29 bis 36, **dadurch gekennzeichnet, dass** die Durchgangsöffnung (32) unter Bildung zweier ungleich dicker Wandpartien (62,64) außermittig angeordnet ist.

38. Tülle nach Anspruch 37, **dadurch gekennzeichnet, dass** die Rastorgane (42) auf der Seite der dickeren Wandpartie (64) angeordnet sind.

39. Tülle nach einem der Ansprüche 29 bis 38, **dadurch gekennzeichnet, dass** die Rastorgane (42) einen parallel zu zwei gegenüberliegenden Seitenwänden ausgerichtete, in einen Hohlraum (52) im Tüllenmaterial einbiegbaren Federsteg (44) und einen am freien Ende des Federstegs (44) angeformten Rastnocken (46) aufweisen.

40. Tülle nach einem der Ansprüche 29 bis 39, **dadurch gekennzeichnet, dass** die Rastorgane (42) als voneinander getrennte Bauteile in das Tüllenmaterial eingebettet sind.

41. Tülle nach einem der Ansprüche 29 bis 39, **dadurch gekennzeichnet, dass** die Rastorgane (42) über einen das Tüllenmaterial durchdringenden oder übergreifenden Verbindungssteg (60) miteinander verbunden sind.

42. Tülle nach einem der Ansprüche 29 bis 41, **dadurch gekennzeichnet, dass** der Rastnocken (46) eine Auflaufschräge (48) und eine an die Auflaufschräge (48) über eine Rastkante anschließende Rastfläche (50) aufweist.

## Claims

1. Device for covering and sealing a hole (10) through a wall intended for leading cables through the latter, having a retaining frame (16) that can be fastened to the edge (66) of the hole through the wall (10), and several bushes (30, 31) made of elastomer material, at least one part of which is provided with at least one passage opening (32) for a cable, wherein the frame openings (28) are open on one side for insertion of the bushes (30, 31), and that at least one of the bushes (31) that can be inserted into the frame openings, in each instance, can be fixed in place in the insertion direction, in the region of the side walls (36) that delimit the frame opening (28), **characterized in that** the side walls (36) of the frame openings (28) are provided with catch depressions (38) for accommodating catch organs (42) that project laterally, partially above the bush surface (40).

2. Device according to claim 1, **characterized in that** the frame openings (24) are open crosswise to the passage opening (32).

3. Device according to claim 1 or 2, **characterized in that** the at least one bush can be arrested in the insertion direction.

4. Device according to one of claims 1 to 3, **characterized in that** the bushes are provided with lateral catch depressions or catch edges for accommodating catch organs on the side walls that project inward, partially above the side walls.

5. Device according to one of claims 1 to 4, **characterized in that** the catch organs (42) are embedded at least partially in the bush material.

6. Device according to one of claims 1 to, 5, **characterized in that** the catch organs (42) are configured to be bendably elastic.

7. Device according to one of claims 1 to 6, **characterized in that** the catch organs (42) consist of a rigid or rigid elastic component embedded in the bush material, preferably made of plastic or metal.

8. Device according to one of claims 1 to 7, **characterized in that** a cavity (52) assigned to the catch organ (42) is disposed within the filler material, into which the catch organ (42) dips temporarily during the engagement process.

9. Device according to one of claims 1 to 8, **characterized in that** at least one part of the bushes (30, 31) consists of two bush halves (31', 31") that face one another on the side of the passage opening (32), and mutually complement one another, preferably configured with mirror symmetry, which have a catch organ (42) or a catch depression on sides facing away from one another, in each instance.

10. Device according to claim 9, **characterized in that** the bush halves (31', 31") are connected with one another, at one join (54), preferably in one piece, in hinge-like manner, and are open on the side (56) that lies opposite the join (54), forming an edge opening (34).

11. Device according to claim 10, **characterized in that** the bush halves (31', 31") have a film hinge (55) at the closed join (54) .

12. Device according to one of claims 1 to 11, **characterized in that** the side walls (36) that lie opposite one another and that delimit the frame openings (28) are oriented parallel to one another.

13. Device according to claim 12, **characterized in that** the catch depressions (38) or catch projections assigned to the frame openings lie opposite one another as mirror images on the related side walls (36).

14. Device according to one of claims 1 to 13, **characterized in that** the passage openings (32) of the bushes (30, 31) are disposed outside the center in the insertion direction, forming two wall parts (62, 64) of unequal thickness.

15. Device according to claim 14, **characterized in that** the catch organs (42) of the bushes (30, 31) are asymmetrically disposed on the side of the thicker wall part (64).

16. Device according to claim 14 or 15, **characterized in that** two bushes (30, 31) in each instance, are disposed in a frame opening (28), in such a manner that they rest against one another with their thin-walled wall parts (62) and face away from one another with their thick wall parts (64).

17. Device according to claim 16, **characterized in that** only one bush (31) can be arrested in each frame opening, in each instance, with the side walls (36) of the frame opening (28).

18. Device according to one of claims 1 to 17, **characterized in that** the retaining frame (16) can be screwed onto the edge (66) of the hole through the wall.

19. Device according to one of claims 1 to 18, **characterized in that** the essentially rectangular retaining frame (16) has two closed narrow side edges (18) and one closed broad side edge (20), while the opposite broad side edge (22) is open.

20. Device according to claim 19, **characterized in that** the retaining frame (16) is provided with fixation tabs (72) that project towards the side of the hole (10) through the wall, and can be arrested on the edge (66) of the hole through the wall, in the region of its closed narrow side edges (18).

21. Device according to claim 20, **characterized in that** the fixation tabs (72) are configured as loose components that can be fixed in place with a positive lock in an adapted pass-through opening (70) in the closed narrow side edges (18) of the retaining frame (16).

22. Device according to claim 20 or 21, **characterized in that** the fixation tabs (72) have a catch pocket (74) that surrounds the edge (66) of the hole through the wall (12), as well as a catch element (78) that can engage on the retaining frame (16) in the region of the pass-through opening.

23. Device according to one of claims 20 to 22, **characterized in that** the fixation tabs (72) have an activation organ (76) that projects beyond the retaining frame (16) on the front, to produce and/or release the catch connection with the edge (66) of the hole through the wall.

24. Device according to one of claims 1 to 23, **characterized in that** the catch organs have a spring stay (44) that is oriented parallel to the side wall (40) of the bush (30, 31) or the bush halves (31', 31"), which can be bent into a cavity (52) in the bush material, in spring-like manner, and a catch cam (46) that is molded onto the free end of the spring stay.

25. Device according to one of claims 1 to 24, **characterized in that** the catch organs (42) are embedded in one of the bush halves (31', 31"), in each instance, as components that are separate from one another.

26. Device according to one of claims 1 to 25, **characterized in that** the catch organs (42) are connected with one another by way of a connecting stay (60) that penetrates or surrounds the bush.

27. Device according to one of claims 24 to 26, **characterized in that** the catch cams (46) have a run-up incline (48) that faces in the insertion direction, and a catch surface (50) that follows the run-up incline at the back, facing opposite the insertion direction.

28. Device according to one of claims 24 to 26, **characterized in that** the catch depressions (38) in the side walls (36) are formed to be complementary to the catch cams (46) of the bushes (31) that form the closure piece.

29. Bush for a cable lead-through device (14) having a retaining frame provided with frame openings, which consists of elastomer material and is provided with at least one passage opening (32) for a cable, **characterized by** two catch organs (42) that project beyond the bush surface (40) towards opposite sides, which can engage into catch depressions in the side walls of the frame openings.

30. Bush according to claim 29, **characterized in that** the catch organs (42) are at least partially embedded in the bush material.

31. Bush according to claim 29 or 30, **characterized in that** the catch organs (42) are configured to be bendably elastic.

32. Bush according to one of claims 29 to 31, **characterized in that** the catch organs (42) consist of a rigid or rigid elastic component embedded in the bush material, preferably made of plastic or metal.

33. Bush according to one of claims 29 to 32, **characterized in that** a cavity (52) is configured within the bush material, into which the catch organ (42) can be bent during the engagement process.

34. Bush according to one of claims 29 to 33, **characterized in that** it consists of two bush halves (31, 31') that face one another on the side of the passage opening (32), and mutually complement one another, preferably configured with mirror symmetry, which have a catch organ (42) or a catch depression on sides facing away from one another, in each instance.

35. Bush according to claim 34, **characterized in that** the bush halves (31', 31") are connected with one another, at one join (54), preferably in one piece, in hinge-like manner, and are open on the opposite join (56), forming an edge opening (34) that leads to the passage opening (32).

36. Bush according to claim 35, **characterized in that** the bush halves (31', 31") have a film hinge (55) at the closed join (54).

37. Bush according to one of claims 29 to 36, **characterized in that** the passage opening (32) is disposed outside the center, forming two wall parts (62, 64) of unequal thickness.

38. Bush according to claim 37, **characterized in that** the catch organs (42) are disposed on the side of the thicker wall part (64).

39. Bush according to one of claims 29 to 38, **characterized in that** the catch organs (42) have a spring stay (44) that is oriented parallel to two opposite side walls, which can be bent into a cavity (52) in the bush material, and a catch cam (46) that is molded onto the free end of the spring stay (44).

40. Bush according to one of claims 29 to 39, **characterized in that** the catch organs (42) are embedded in the bush material as components that are separate from one another.

41. Bush according to one of claims 29 to 39, **characterized in that** the catch organs (42) are connected with one another by way of a connecting stay (60) that penetrates or surrounds the bush.

42. Bush according to one of claims 29 to 41, **characterized in that** the catch cam (46) has a run-up incline (48) and a catch surface (50) that follows the run-up incline (48), by way of a catch edge.

## Revendications

1. Dispositif d'occultation et/ou d'étanchement d'une découpe (10) pratiquée dans une paroi et destinée à la traversée de câbles, comprenant un cadre de retenue (16) pouvant être fixé au bord (66) de ladite découpe de la paroi (12), et plusieurs passe-câbles (30, 31) en un matériau élastomère qui peuvent être insérés amoviblement dans des orifices (28) dudit cadre, et dont au moins une partie est munie d'au moins un orifice de passage (32) affecté à un câble, sachant que lesdits orifices (28) du cadre sont ouverts d'un côté, en vue de l'insertion des passe-câbles (30, 31), et sachant qu'au moins l'un (31) desdits passe-câbles pouvant être insérés dans lesdits orifices du cadre peut être respectivement consigné à demeure, dans la direction d'insertion, dans la région des parois latérales (36) délimitant les orifices (28) du cadre, **caractérisé par le fait que** les parois latérales (36) des orifices (28) du cadre sont dotées de creusures de crantage (38) conçues pour recevoir des organes crantables (42) faisant partiellement saillie, dans le sens latéral, au-delà de la surface (40) du passe-câbles.

2. Dispositif selon la revendication 1, **caractérisé par le fait que** les orifices (28) du cadre sont ouverts transversalement par rapport à l'orifice de passage (32).

3. Dispositif selon la revendication 1 ou 2, **caractérisé par le fait que** le passe-câbles prévu au minimum peut être encliqueté dans la direction d'insertion.

4. Dispositif selon l'une des revendications 1 à 3, **caractérisé par le fait que** les passe-câbles sont pourvus de creusures latérales de crantage ou de bords latéraux de crantage, en vue de recevoir des organes crantables faisant partiellement saillie vers l'intérieur, sur les parois latérales, au-delà desdites parois latérales.

5. Dispositif selon l'une des revendications précédentes, **caractérisé par le fait que** les organes crantables (42) sont au moins partiellement intégrés dans le matériau des passe-câbles.

6. Dispositif selon l'une des revendications précédentes, **caractérisé par le fait que** les organes crantables (42) sont réalisés avec souplesse élastique.

7. Dispositif selon l'une des revendications précédentes, **caractérisé par le fait que** les organes crantables (42) sont constitués d'une pièce structurelle de préférence en matière plastique ou en métal, rigide ou douée de rigidité élastique, noyée dans le matériau des passe-câbles.

8. Dispositif selon l'une des revendications précédentes, **caractérisé par le fait que** l'espace interne du matériau des passe-câbles comporte une cavité (52) qui est dédiée à l'organe crantable (42), et dans laquelle ledit organe crantable (42) s'enfonce provisoirement lors du processus d'encliquetage.

9. Dispositif selon l'une des revendications précédentes, **caractérisé par le fait qu'**au moins une partie des passe-câbles (30, 31) se compose de deux moitiés (31', 31") qui sont tournées l'une vers l'autre du côté de l'orifice de passage (32), sont de réalisations préférentiellement spéculaires, se complétant réciproquement, et sont respectivement munies d'un organe crantable (42) ou d'une creusure de crantage sur des côtés tournés à l'opposé l'un de l'autre.

10. Dispositif selon la revendication 9, **caractérisé par le fait que** les moitiés (31', 31 ") des passe-câbles sont reliées l'une à l'autre dans une zone de rencontre (54), de préférence d'un seul tenant de manière articulée, et sont ouvertes, sur le côté (56) tourné à l'opposé de cette zone de rencontre (54), en formant un orifice marginal (34).

11. Dispositif selon la revendication 10, **caractérisé par le fait que** les moitiés (31', 31") des passe-câbles présentent une charnière pelliculaire (55) dans la zone fermée de rencontre (54).

12. Dispositif selon l'une des revendications précédentes, **caractérisé par le fait que** les parois latérales (36) mutuellement opposées, qui délimitent les orifices (28) du cadre, sont orientées parallèlement l'une à l'autre.

13. Dispositif selon la revendication 12, **caractérisé par le fait que** les creusures de crantage (38) affectées aux orifices du cadre, ou bien des protubérances de crantage sur les parois latérales (36) associées, se font mutuellement face spéculairement.

14. Dispositif selon l'une des revendications précédentes, **caractérisé par le fait que** les orifices de passage (32) des passe-câbles (30, 31) occupent des positions excentrées, dans la direction d'emboîtement, en donnant naissance à deux parties de parois (62, 64) d'épaisseurs inégales.

15. Dispositif selon la revendication 14, **caractérisé par le fait que** les organes crantables (42) des passe-câbles (30, 31) occupent des positions asymétriques du côté de la partie de paroi (64) épaisse.

16. Dispositif selon la revendication 14 ou 15, **caractérisé par le fait que** deux passe-câbles respectifs (30, 31) occupent, dans un orifice (28) du cadre, des positions telles qu'ils se trouvent en vis-à-vis par leurs parties de parois (62) minces, et soient tournés à l'opposé par leurs parties de parois (64) épaisses.

17. Dispositif selon la revendication 16, **caractérisé par le fait que**, dans chaque orifice du cadre, seul un passe-câbles (31) respectif peut être cranté sur les parois latérales (36) des orifices (28) du cadre.

18. Dispositif selon l'une des revendications précédentes, **caractérisé par le fait que** le cadre de retenue (16) peut être rapporté par vissage sur le bord (66) de la découpe.

19. Dispositif selon l'une des revendications précédentes, **caractérisé par le fait que** le cadre de retenue (16), sensiblement rectangulaire, comprend deux bords fermés (18) sur ses petits côtés et un bord fermé (20) sur un grand côté, tandis que le bord (22) du grand côté opposé est ouvert.

20. Dispositif selon la revendication 19, **caractérisé par le fait que** le cadre de retenue (16) est muni, dans la région des bords fermés (18) de ses petits côtés, de pattes de verrouillage (72) qui font saillie vers le côté de la découpe (10) de la paroi, et peuvent être encliquetées sur le bord (66) de ladite découpe.

21. Dispositif selon la revendication 20, **caractérisé par le fait que** les pattes de verrouillage (72) sont réalisées sous la forme de pièces structurelles qui sont montées avec jeu et sont consignées à demeure, par concordance de formes, dans un orifice adapté d'emboîtement (70) pratiqué dans les bords fermés (18) des petits côtés du cadre de retenue (16).

22. Dispositif selon la revendication 20 ou 21, **caractérisé par le fait que** les pattes de verrouillage (72) comprennent un logement d'encliquetage (74) ceinturant le bord (66) de la découpe de la paroi (12), ainsi qu'un élément (78) à déclic pouvant être encliqueté sur le cadre de retenue (16), dans la région de l'orifice d'emboîtement.

23. Dispositif selon l'une des revendications 20 à 22, **caractérisé par le fait que** les pattes de verrouillage (72) présentent un organe d'actionnement (76) en saillie frontale au-delà du cadre de retenue (16), en vue d'instaurer et/ou de dissocier la liaison encliquetée avec le bord (66) de la découpe.

24. Dispositif selon l'une des revendications précédentes, **caractérisé par le fait que** les organes crantables comprennent une membrure élastique (44) qui est orientée parallèlement à une paroi latérale (36) du passe-câbles (30, 31) ou des moitiés (31', 31") d'un passe-câbles, et peut être intégrée par flexion élastique dans une cavité (52) réservée dans le matériau dudit passe-câbles, ainsi qu'un bec (46) à déclic qui fait corps avec l'extrémité libre de ladite membrure élastique.

25. Dispositif selon l'une des revendications précédentes, **caractérisé par le fait que** les organes crantables (42) dont intégrés, en tant que pièces structurelles mutuellement distinctes, dans l'une considérée des moitiés (31', 31") des passe-câbles.

26. Dispositif selon l'une des revendications précédentes, **caractérisé par le fait que** les organes crantables (42) sont mutuellement solidarisés par l'intermédiaire d'une membrure de liaison (60), laquelle traverse ou coiffe le passe-câbles.

27. Dispositif selon l'une des revendications 24 à 26, **caractérisé par le fait que** le bec (46) à déclic comprend une rampe d'ascension (48) pointant dans la direction d'insertion, et une surface d'encliquetage (50) qui se rattache postérieurement à ladite rampe d'ascension et est orientée en sens inverse de ladite direction d'insertion.

28. Dispositif selon l'une des revendications 24 à 26, **caractérisé par le fait que** les creusures de crantage (38), pratiquées dans les parois latérales (36), ont une configuration complémentaire de celle des becs (46) à déclic du passe-câbles (31) matérialisant la pièce de fermeture.

29. Passe-câbles destiné à un dispositif (14) de traversée de câbles muni d'un cadre de retenue présentant des orifices, constitué d'un matériau élastomère et pourvu d'au moins un orifice (32) de passage d'un câble, **caractérisé par** deux organes crantables (42) qui font saillie vers des côtés opposés, au-delà de la surface (40) dudit passe-câbles, et peuvent être encliquetés dans des creusures de crantage façonnées dans les parois latérales des orifices du cadre.

30. Passe-câbles selon la revendication 29, **caractérisé par le fait que** les organes crantables (42) sont au moins partiellement intégrés dans le matériau dudit passe-câbles.

31. Passe-câbles selon la revendication 29 ou 30, **caractérisé par le fait que** les organes crantables (42) sont réalisés avec souplesse élastique.

32. Passe-câbles selon l'une des revendications 29 à 31, **caractérisé par le fait que** les organes crantables (42) sont constitués d'une pièce structurelle de préférence en matière plastique ou en métal, rigide ou douée de rigidité élastique, noyée dans le matériau dudit passe-câbles.

33. Passe-câbles selon l'une des revendications 29 à 32, **caractérisé par le fait que** l'espace interne du matériau dudit passe-câbles comporte une cavité (52) dans laquelle l'organe crantable (42) peut être ployé lors du processus d'encliquetage.

34. Passe-câbles selon l'une des revendications 29 à 33, **caractérisé par le fait qu'**il se compose de deux moitiés (31', 31") qui se font mutuellement face du côté de l'orifice de passage (32), se complètent réciproquement, occupent de préférence des positions spéculaires et présentent, respectivement, un organe crantable (42) ou une creusure de crantage sur des côtés tournés mutuellement à l'opposé.

35. Passe-câbles selon la revendication 34, **caractérisé par le fait que** les moitiés (31',31") dudit passe-câbles sont reliées l'une à l'autre dans une zone de rencontre (54), de préférence d'un seul tenant de manière articulée, et sont ouvertes dans la zone de rencontre (56) opposée, en formant un orifice marginal (34) menant à l'orifice de passage (32).

36. Presse-câbles selon la revendication 35, **caractérisé par le fait que** les moitiés (31', 31 ") des passe-câbles présentent une charnière pelliculaire (55) dans la zone fermée de rencontre (54).

37. Passe-câbles selon l'une des revendications 29 à 36, **caractérisé par le fait que** l'orifice de passage (32) occupe une position excentrée, en donnant naissance à deux parties de parois (62, 64) d'épaisseurs inégales.

38. Passe-câbles selon la revendication 37, **caractérisé par le fait que** les organes crantables (42) sont disposés du côté de la partie de paroi (64) plus épaisse.

39. Passe-câbles selon l'une des revendications 29 à 38, **caractérisé par le fait que** les organes crantables (42) comprennent une membrure élastique (44) qui est orientée parallèlement à deux parois latérales mutuellement opposées, et peut être intégrée par flexion élastique dans une cavité (52) réservée dans le matériau dudit passe-câbles, ainsi qu'un bec (46) à déclic qui fait corps avec l'extrémité libre de ladite membrure élastique (44).

40. Passe-câbles selon l'une des revendications 29 à 39, **caractérisé par le fait que** les organes crantables (42) sont intégrés, en tant que pièces structurelles mutuellement distinctes, dans le matériau dudit passe-câbles.

41. Passe-câbles selon l'une des revendications 29 à 39, **caractérisé par le fait que** les organes crantables (42) sont mutuellement solidarisés par l'intermédiaire d'une membrure de liaison (60), laquelle traverse ou coiffe le matériau dudit passe-câbles.

42. Passe-câbles selon l'une des revendications 29 à 41, **caractérisé par le fait que** le bec (46) à déclic comprend une rampe d'ascension (48) et une surface d'encliquetage (50) se rattachant à ladite rampe d'ascension (48), par l'intermédiaire d'un bord encliquetable.
